# EUROPÄISCHE PATENTANMELDUNG

(11) **EP 4 461 990 A1**
(43) Veröffentlichungstag der Anmeldung: **13.11.2024**
(21) Anmeldenummer: 23172011.1
(22) Anmeldetag: 08.05.2023
(51) Int. Cl.: F16H 1/22

(54) **GETRIEBE ZUM ANTREIBEN EINES SCHIFFES**

(71) Anmelder: Flender GmbH, 46395 Bocholt (DE)
(72) Erfinder: SCHLEGEL, Eugen, 46395 Bocholt (DE)
(74) Vertreter: Michalski Hüttermann & Partner Patentanwälte mbB

(57) **Zusammenfassung**

Die Erfindung betrifft ein Zweimotoren-Sammelgetriebe 10 zum Antreiben eines Schiffspropellers, mit einem Gehäuseelement 12, zwei in dem Gehäuseelement 12 parallel angeordnete und um jeweilige Drehachsen A_{D} antreibbare Eingangswellen 14, 16 und einer in dem Gehäuseelement 12 um eine dritte zu den ersten beiden parallele Drehachse angetriebene und angeordnete Ausgangswelle 18, wobei jede der Eingangswellen 14, 16 jeweils mit einem Ritzel 20, 22 und die Ausgangswelle 18 mit einer Verzahnung 24 drehfest verbunden ist. Die Verzahnung 14 ist als Innenverzahnung ausgeführt, so dass die Verzahnungspaarung zwischen Innenverzahnung und jeweiligem Ritzel 20, 22 radial außerhalb der Drehachsen A_{D} liegt und ein größeres Übersetzungsverhältnis möglich ist.

## Beschreibung

Die Erfindung betrifft ein Zweimotoren-Sammelgetriebe zum Antreiben eines Schiffspropellers, mit einem Gehäuseelement, zwei in dem Gehäuseelement parallel angeordnete und um jeweilige Drehachsen antreibbare Eingangswellen und einer in dem Gehäuseelement um eine dritte zu den ersten beiden parallele Drehachse angetriebene und angeordnete Ausgangswelle, wobei jede der Eingangswellen jeweils mit einem Ritzel und die Ausgangswelle mit einer Verzahnung drehfest verbunden ist.

In derzeitigen Fahrgastschiffen, Containerschiffe oder auch Marineschiffen können Dieselmotoren als Antrieb zum Einsatz kommen. Diese unterscheiden sich zwar in der Antriebsdrehzahl, sind aber im Allgemeinen als mittelschnell-laufende bis schnell-laufende Dieselmotoren zu bezeichnen. Die eingesetzten Motoren zeichnen sich durch einen Nenndrehzahlbereich von n = 600 1/min einerseits und von n > 900 1/min andererseits aus. Ausgehend von dem Motor erfolgt über ein Getriebe immer eine Übersetzung der Motordrehzahl ins Langsame auf Seiten des Schiffspropellers. Die Motoren mit einem Nenndrehzahlbereich von 600n/min zeichnen sich durch ein hohes Antriebsdrehmoment aus, das nachgeordnet ein einstufiges Getriebe mit einer verhältnismäßig kleinen Übersetzung verlangt. Verglichen hierzu zeichnen sich die Motoren mit einem Nenndrehzahlbereich von n > 900 1/min durch ein geringeres Antriebsdrehmoment aus, das nachgeordnet ein zweistufiges Getriebe mit einer entsprechend höheren Übersetzung verlangt. Während für den Einsatz von Motoren mit einem Nenndrehzahlbereich von n > 900 1/min ihre höhere Effizient mit geringem Dieselverbrauch spricht, ist das einzusetzende zweistufige Getriebe im Hinblick auf die geringere Betriebssicherheit als nachteilig zu sehen, da es eine höhere Anzahl an Komponenten benötigt und zudem einen größeren Bauraum beansprucht. Es kann hieraus folglich ein Bedürfnis abgeleitet werden, eine Antriebslösung bereitzustellen, die Motoren mit einem Nenndrehzahlbereich von n > 900 1/min aufgrund ihrer Effizienz mit einem nachgeordneten einstufigen Getriebe aufgrund seiner Robustheit kombiniert.

Es ist die Aufgabe der Erfindung Maßnahmen aufzuzeigen, die eine Antriebslösung mit einem Motor mit einem Nenndrehzahlbereich von n > 900 1/min in Kombination mit einem einstufigen Getriebe ermöglicht.

Die Lösung der Aufgabe erfolgt durch eine Zweimotoren-Sammelgetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Zweimotoren-Sammelgetriebe zum Antreiben eines Schiffspropellers, mit einem Gehäuseelement, zwei in dem Gehäuseelement parallel angeordnete und um jeweilige Drehachsen antreibbare Eingangswellen und einer in dem Gehäuseelement um eine dritte zu den ersten beiden parallele Drehachse angetriebene und angeordnete Ausgangswelle, wobei jede der Eingangswellen jeweils mit einem Ritzel und die Ausgangswelle mit einer Verzahnung drehfest verbunden ist und die Verzahnung mit den beiden Ritzeln in einem Verzahnungseingriff stehend als Innenverzahnung ausgebildet ist.

Das Gehäuseelement kann als Gussteil oder als geschweißtes Teil ausgeführt sein. In beiden Fällen ist vorgesehen, dass die Funktionsflächen nachgearbeitet werden. Ein Gussteil bietet den Vorteil, dass komplexere Geometrien gefertigt werden können, wobei es gilt Hinterschneidungen auf ein Minimum zu beschränken.

Grundsätzlich können beide Eingangswellen identisch aufgebaut und dimensioniert sein und zwar insbesondere dann, wenn davon ausgegangen wird, dass zwei identische Antriebe Verwendung finden, deren Leistung über das Sammelgetriebe summiert werden soll. Denkbar wäre allerdings auch, dass beide Eingangswellen voneinander abweichend aufgebaut und dimensioniert sind, beispielsweise wenn beispielsweise ein Hauptantrieb und ein schwächer ausgelegter Nebenantrieb als zweite Antriebsquelle vorgesehen ist. Die Eingangswellen können als Ritzelwellen bezeichnet werden, da sie zur einen Seite hin bzw. endseitig das jeweilige Ritzel tragen. Dieser jeweilige Endabschnitt der Eingangswelle, der das Ritzel trägt, kann auch als Ritzelkopf bezeichnet werden. Indem die Verzahnungspaarung zwischen dem jeweiligen Ritzel und der Innenverzahnung, verglichen mit der herkömmlichen Lösung eines abgetriebenen Stirnrads innerhalb der Ritzel, nach radial außen, d.h. radial außerhalb der Drehachsen der Eingangswellen, verlegt wurde, können für die Innenverzahnung eine höhere Zähnezahl und damit eine höheres Übersetzungsverhältnis erzielt werden und zwar ohne dass die Abmessungen des Getriebe wesentlich verändert werden müssen. In einer bevorzugten Ausgestaltung ist vorgesehen, dass die beiden parallelen Drehachsen der Eingangswellen radial innerhalb einem durch die Innenverzahnung gebildeten Umfang liegen. Obwohl weiterhin ein einstufiges Getriebe bereitgestellt wird, entspricht das Übersetzungsverhältnis zumindest annähernd dem eines zweistufigen Getriebes. Das weiterhin einstufig ausgeführte Getriebe zeichnet sich folglich durch ein relevant höheres Übersetzungsverhältnis bei gleichzeitig weiterhin kompakter und wenig komplexer Bauweise aus.

In einer bevorzugten Ausgestaltung ist die Innenverzahnung an einem als ein die beiden Ritzel der Eingangswellen umschließenden Hohlrad gebildet. Über ein Hohlrad ist es möglich eine ausreichend steife Struktur für die Innenverzahnung bereitzustellen und eine Anbindung der Innenverzahnung an die Ausgangswelle zu realisieren. Da die Innenverzahnung, und damit zwangsläufig auch das Hohlrad drehend ausgeführt sind, werden die beiden Eingangswellen von einer axialen Seite an das Hohlrad herangeführt und beide Eingangswellen müssen somit auch auf dieser einen Seite des Hohlrades über eine entsprechende Lagerung gehalten werden. Hiervon ausgehend ist das Hohlrad mehrteilig durch einen die Innenverzahnung umfassenden Zahnkranz und den Zahnkranz mit der Ausgangswelle verbindenden Radialfächer aufgebaut. Hierbei kann der Radialfächer scheibenartig oder speichenartig eine innenliegende Nabe mit dem außenumfänglich verlaufenden Zahnkranz verbinden.

In einer bevorzugten Ausgestaltung ist vorgesehen, dass jede der Eingangswellen über eine Lagerung, bevorzugt eine Gleitlagerung, jeweils beidseitig des Ritzels der Eingangswelle gegenüber dem Gehäuseelement des Sammelgetriebes drehbar gelagert ist. Durch diese Ausgestaltung verteilt sich die aus der Verzahnung resultierende Radialkraft gleichmäßig auf die Lagerungen und ein auf die jeweilige Eingangswelle wirksames Biegemoment wird gleichmäßig abgestützt. Insbesondere kann vorgesehen sein, dass das eine der beidseitig des Ritzels angeordneten Gleitlager innerhalb eines durch das Hohlrad aufgespannten Volumens angeordnet ist.

In einer bevorzugten alternativen Ausgestaltung der Gleitlagerung ist vorgesehen, dass jede der Eingangswellen über eine auf einer axialen Seite des jeweiligen Ritzels angeordnete Gleitlagerpaarung gegenüber dem Gehäuseelement des Sammelgetriebes drehbar gelagert ist. Hierbei ist der über die Gleitlagerpaarung in Richtung der Innenverzahnung zeigende und das Ritzel tragende Endabschnitt der Eingangswelle freischwebend ausgeführt. Um die Gleitlagerpaarung richtig stützen zu können ist am Gehäuseelement passend eine Stützstruktur angebracht. Durch diese Lageranordnung verteilen sich die radialen Kräfte aus der Verzahnung ungleichmäßig auf die Gleitlager, so dass es zweckmäßig ist, wenn das näher an dem jeweiligen Ritzel befindliche Gleitlager größer dimensioniert ist, als das entfernte Gleitlager.

In einer bevorzugten Ausgestaltung der Lagerung des Hohlrads ist vorgesehen, dass das Hohlrad mittelbar über die Ausgangswelle gegenüber dem Gehäuseelement drehbar gelagert ist. Hierbei können L-förmige Gleitlagerelemente vorgesehen sein, die zu beiden axialen Seiten des Hohlrades eingesetzt sind, so dass hierüber zusätzlich Axialkräfte in die Gehäusewände eingeleitet werden können.

In einer bevorzugten alternativen Ausgestaltung der Lagerung des Hohlrads ist vorgesehen, dass das Hohlrad außenumfänglich gegenüber dem Gehäuseelement drehbar gelagert ist. Bevorzugt ist zusätzlich in Axiallager zum Abstützen der zwischen dem Hohlrad und dem Gehäuseelement wirksamen Axialkräfte vorgesehen. Konkret ausgestaltet kann das Hohlrad über zumindest ein Gleitlagerelement gegenüber dem Gehäuseelement gelagert sein. Hierbei kann eine große Lagerschale vorgesehen sein, die das Hohlrad vertikal gegenüber dem Gehäuseelement trägt und somit in erster Linie die Gewichtskraft des Hohlrades abstützt. Stattdessen können auch drei relativ gesehen kleinere Lagerschalen vorgesehen sein, die gleichmäßig über einen Umfang zwischen Hohlrad und Gehäuseelement verteilt angeordnet sind und hierüber für einen verbesserten Rundlauf des Hohlrades gegenüber dem Gehäuseelement sorgen.

In einer bevorzugten Ausgestaltung ist vorgesehen, dass das Gehäuseelement mehrteilig aus im Wesentlichen zwei Gehäusehälften oder aus einem Gehäusevolumen mit Deckelelement zusammengesetzt ist. In der Variante mit im Wesentlichen zwei Gehäusehälften ist es zweckmäßig, wenn zwischen den zwei Gehäusehälften eine horizontale Teilung liegt. Zweckmäßig ist es, wenn jeder der Gehäusehälften einen zu der jeweils anderen Hälfte passenden und komplementären Flanschabschnitt ausbildet.

In einer bevorzugten Ausgestaltung ist vorgesehen, dass ein in das Gehäuseelement eingesetzter Lagerungseinsatz vorgesehen ist, über den die beiden Eingangswellen und die Ausgangswelle zumindest teilweise und mittelbar gegenüber dem Gehäuseelement gelagert sind. Zudem wird die Aufgabe gelöst durch einen Antriebsstrang für einen Schiffsantrieb zum Antreiben einer mit einem Propeller verbundenen Propellerantriebswelle, umfassend zwei Antriebe und ein die Antriebe summierend mit der Propellerantriebswelle verbindendes Getriebe, wobei das Getriebe als Zweimotoren-Sammelgetriebe nach einem der vorangegangenen Ansprüche ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: schematisch einen Antriebsstrang mit einem Zweimotoren-Sammelgetriebe für einen Schiffsantrieb;
Fig. 2a), 2b): Varianten einer Lagerung der Eingangswellen eines Getriebe nach Fig. 1;
Fig. 3a), 3b): Varianten einer Lagerung des Hohlrades eines Getriebe nach Fig. 1;
Fig. 4a), 4b) und 5: Varianten eines Gehäuseelements eines Getriebe nach Fig. 1.

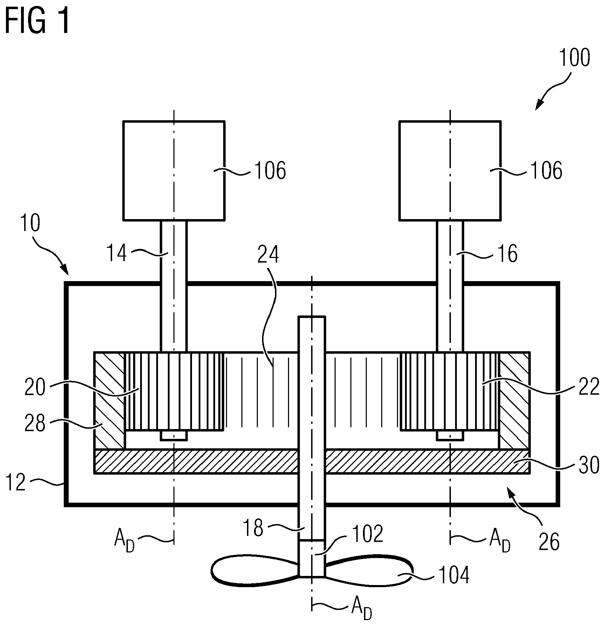

Die Figur 1 zeigt schematisch und nicht maßstäblich einen Antriebsstrang 100 für einen Schiffsantrieb zum Antreiben einer mit einem Propeller 104 verbundenen Propellerantriebswelle 102. Gezeigt sind zwei Antriebe 106, die beispielsweise als schnelllaufende Dieselmotoren mit einer Nenndrehzahl in einer Größenordnung von n = 900 bis 1000 1/min ausgeführt sein können. Die zwei Antriebe 106 sind mit einem Zweimotoren-Sammelgetriebe 10 verbunden, über das die Antriebsleistung beider Antriebe 106 summiert an die Propellerantriebswelle 102 und weiter an den Propeller 104 übertragen wird. Es können nicht dargestellte Kupplungen und Freilaufeinrichtungen vorgesehen sein.

Das Zweimotoren-Sammelgetriebe 10 weist ein Gehäuseelement 12 auf, in dem zwei parallel angeordnete und um jeweilige Drehachsen A_{D} von dem jeweiligen Antrieb 106 antreibbare Eingangswellen 14, 16 und eine um eine dritte und ebenfalls parallele Drehachse A_{D} angetriebene Ausgangswelle 18 angeordnet ist. Jede der Eingangswellen 14, 16 ist jeweils mit einem Ritzel 20, 22 und die Ausgangswelle 18 ist mit einer als Innenverzahnung ausgebildete Verzahnung 24 drehfest verbunden. Es ist ein Hohlrad 26 vorgesehen, in dem die Innenverzahnung 24 angeordnet ist. Die beiden Ritzel 20, 22 stehen jeweils innerhalb des Hohlrades 26 in einem Verzahnungseingriff mit der Innenverzahnung 24. Das Hohlrad 26 ist vorliegend mehrteilig ausgeführt, wobei die Innenverzahnung 24 über einen Zahnkranz 28 ausgeführt ist und der Zahnkranz 28 über einen Radialfächer 30 mit der Ausgangswelle 18 zur gemeinsamen Drehung verbunden ist. Radialfächer 30 und Zahnkranz 28 können auf geeignete Weise miteinander verbunden sein, beispielsweise über eine umfänglich verlaufende Verschraubung.

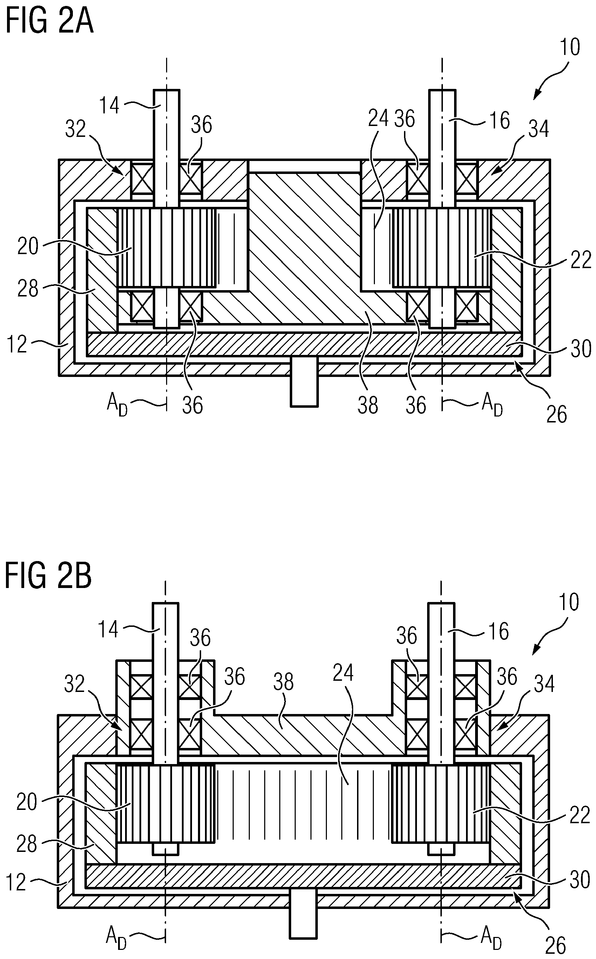

In den Figuren 2a) und 2b) sind zwei mögliche Varianten einer Lagerung der Eingangswellen dargestellt. In der Figur 2a) ist jede der Eingangswellen 14, 16 über eine Gleitlagerung 32, 34 jeweils beidseitig des Ritzels 20, 22 der Eingangswellen 14, 16 gegenüber dem Gehäuseelement 12 drehbar gelagert. Zur Aufnahme der jeweiligen Gleitlagerungen 32, 34 kann, wie vorliegend dargestellt, ein Lagereinsatz 38 vorgesehen sein, um über diesen eine Anbindung an das Gehäuseelement 12 zu realisieren. Jede der Gleitlagerungen 32, 34 besteht aus einem ersten und einem zweiten Gleitlager 36. Das eine der beidseitig des Ritzels 20, 22 angeordneten Gleitlager 36 ist innerhalb eines durch das Hohlrad 26 aufgespannten Volumens angeordnet. Dieses innere Gleitlager 36 wird vorliegend von dem Lagereinsatz 38 aufgenommen.

Bei der in Figur 2b) gezeigten Variante der Lagerung ist jede der Eingangswellen 14, 16 über eine auf einer axialen Seite des jeweiligen Ritzels angeordnete Gleitlagerpaarung 32, 34 gegenüber dem Gehäuseelement 12 drehbar gelagert. Die das jeweilige Ritzel 20, 22 tragenden Endabschnitt der Eingangswelle 14, 16 sind freischwebend ausgeführt. Hierbei kann, wie vorliegend dargestellt, dass unmittelbar benachbart zu dem jeweiligen Ritzel 20, 22 angeordnete Gleitlager größer dimensioniert sein als das andere Lager der Gleitlagerpaarung 32, 34.

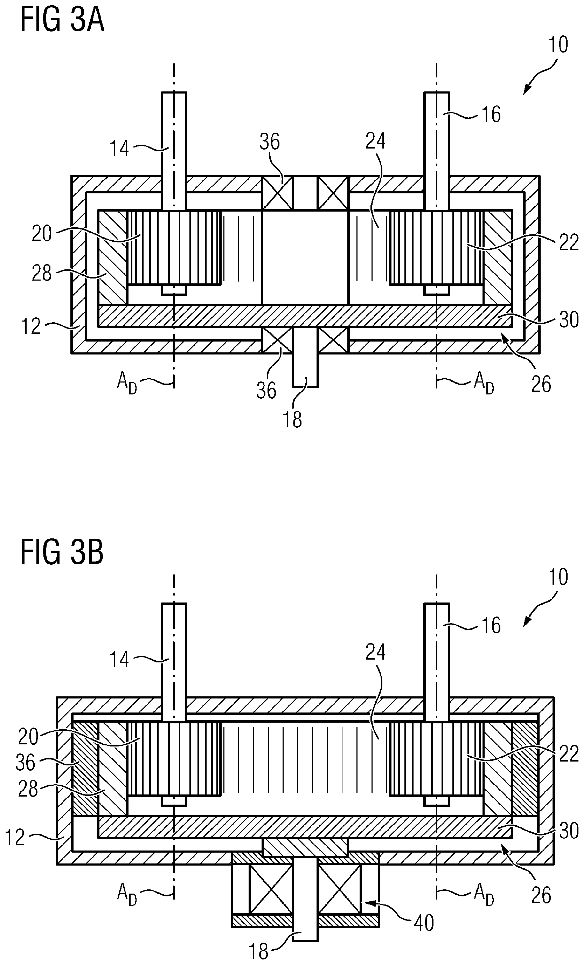

In den Figuren 3a) und 3b) sind zwei mögliche Varianten einer Lagerung des Hohlrades dargestellt. In der Figur 3a) ist das Hohlrad 26 mittelbar über die Ausgangswelle 18 gegenüber dem Gehäuseelement 12 drehbar gelagert. Es sind zwei L-förmige Gleitlagerelemente 36 vorgesehen, über die die Ausgangswelle gegenüber dem Gehäuseelement 12 gelagert ist. Über die Gleitlagerelemente 36 erfolgt eine axiale und eine radiale Lagerung der Hohlwelle gegenüber dem Gehäuseelement 36. In der Figur 3b) ist die zweite Variante der Lagerung gezeigt, bei der das Hohlrad 26 außenumfänglich gegenüber dem Gehäuseelement 12 drehbar gelagert ist. Es ist zumindest ein Gleitlagerelement 36 vorgesehen, über das das Hohlrad 26 radial gegenüber dem Gehäuseelement 12 gelagert ist. Zudem ist ein Axiallager 40 zu axialer Lagerung des Hohlrades 26 gegenüber dem Gehäuseelement 12 vorgesehen.

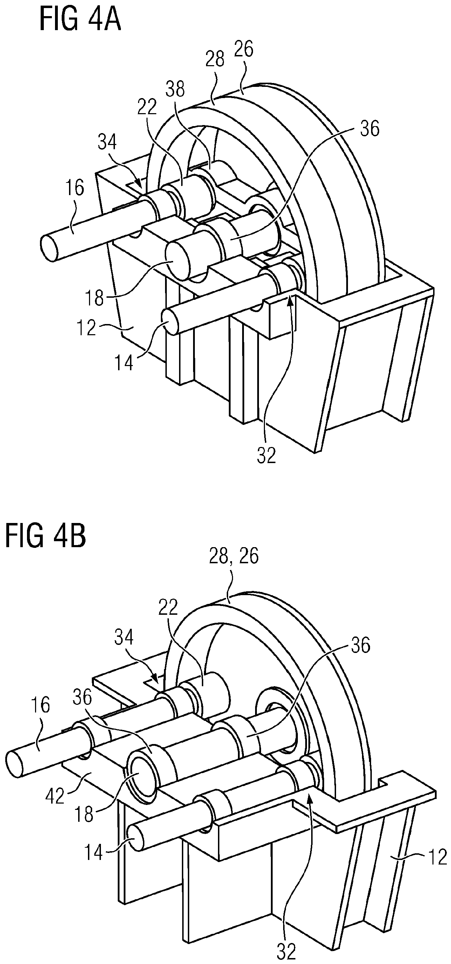

Die Figuren 4a) und 4b) zeigt zwei Varianten eines Gehäuseelements 12 in einer horizontalen Teilung, wobei bei dem mehrteiligen Gehäuseelement 12 nur jeweils eine Gehäusehälfte dargestellt ist, vorliegend die untere Hälfte. Der Unterschied zwischen den beiden dargestellten Varianten liegt in der zu den Figuren 2a) und 2b) beschriebenen Lagerung der Eingangswellen 14, 16 gegenüber dem Gehäuseelement 12. Die Figur 4a) zeigt eine Variante des Gehäuseelements 12, bei der über den Lagereinsatz 38 die Eingangswellen 14, 16 und die Ausgangswelle 18 zur einen axialen Seite hin über den Lagereinsatz 38 und zur anderen axialen Seite hin über eine Wand des Gehäuseelements 12 gehalten ist. Die Figur 4a) zeigt eine Variante des Gehäuseelements 12, bei der das Gehäuseelement 12 einen verbreiterten Lagerflansch 42 ausbildet, über den die Eingangswellen 14, 16 mit ihrer jeweiligen Gleitlagerpaarung 32, 34 und das endseitige Gleitlagerelement 36 der Ausgangswelle 18 gehalten ist.

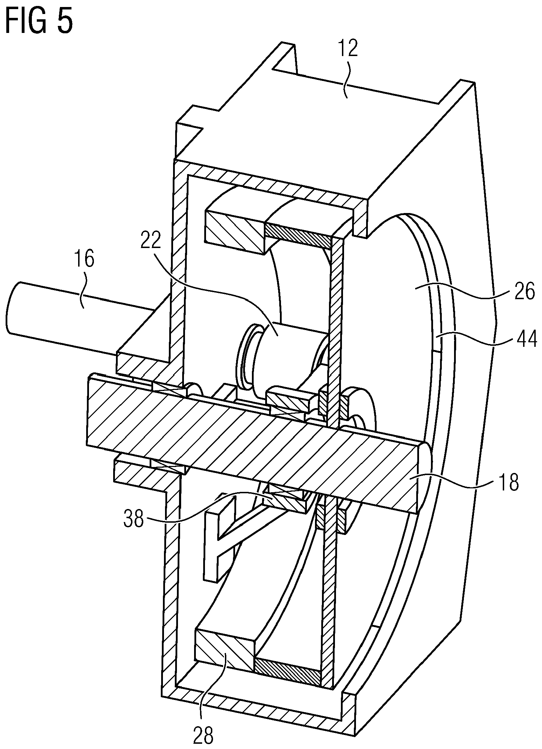

In der Figur 5 ist eine weitere Variante des Gehäuseelements 12 gezeigt. Das Gehäuseelement 12 ist im Wesentlichen einteilig mit einem Deckelelement, welches nicht dargestellt ist, ausgeführt, wobei das Deckelelement in die Gehäuseöffnung 44 eingesetzt wird. Bei einer derartigen vertikalen Teilung des Gehäuseelements 12 kann eine stark vereinfachte Geometrie der Verbindungsflächen vorgesehen werden. Vorliegend ist ein Lagereinsatz 38 vorgesehen. Der Lagereinsatz 38 kann allerdings auch durch eine mit dem Gehäuseelement 12 fest verbundene Stützstruktur ersetzt werden.

### Bezugszeichenliste

- 10: Zweimotoren-Sammelgetriebe
- 12: Gehäuseelement
- 14: Eingangswelle
- 16: Eingangswelle
- 18: Ausgangswelle
- 20: Ritzel
- 22: Ritzel
- 24: Verzahnung
- 26: Hohlrad
- 28: Zahnkranz
- 30: Radialfächer
- 32: Gleitlagerung
- 34: Gleitlagerung
- 36: Gleitlagerelement
- 38: Lagereinsatz
- 40: Axiallager
- 42: Lagerflansch
- 44: Gehäuseöffnung
- 100: Antriebsstrang
- 102: Propellerantriebswelle
- 104: Propeller
- 106: Antrieb

## Patentansprüche

1. Zweimotoren-Sammelgetriebe (10) zum Antreiben eines Schiffspropellers, umfassend ein Gehäuseelement (12),
zwei in dem Gehäuseelement (12) parallel angeordnete und um jeweilige Drehachsen A_{D} antreibbare Eingangswellen (14, 16) und eine in dem Gehäuseelement (12) um eine dritte zu den ersten beiden parallele Drehachse A_{D} angetriebene und angeordnete Ausgangswelle (18),
wobei jede der Eingangswellen (14, 16) jeweils mit einem Ritzel (20, 22) und die Ausgangswelle (18) mit einer Verzahnung (24) drehfest verbunden ist,
**dadurch gekennzeichnet, dass**
die Verzahnung (24) mit den beiden Ritzeln (20, 22) in einem Verzahnungseingriff stehend als Innenverzahnung ausgebildet ist.

2. Sammelgetriebe (10) nach Anspruch 1, **dadurch gekennzeichnet, dass** die Innenverzahnung (24) an einem als ein die beiden Ritzel (20, 22) der Eingangswellen (14, 16) umschließenden Hohlrad (26) gebildet ist.

3. Sammelgetriebe (10) nach Anspruch 2, **dadurch gekennzeichnet, dass** das Hohlrad (26) mehrteilig durch einen die Innenverzahnung (24) umfassenden Zahnkranz (28) und den Zahnkranz (28) mit der Ausgangswelle (18) verbindenden Radialfächer (30) aufgebaut ist.

4. Sammelgetriebe (10) nach Anspruch 1, 2 oder 3, **dadurch gekennzeichnet, dass** die beiden parallelen Drehachsen A_{D} der Eingangswellen (14, 16) radial innerhalb einem durch die Innenverzahnung (24) gebildeten Umfang liegen.

5. Sammelgetriebe (10) nach einem der Ansprüche 1 bis 4, **dadurch gekennzeichnet, dass** jede der Eingangswellen (14, 16) über eine Lagerung (32, 34), bevorzugt eine Gleitlagerung, jeweils beidseitig des Ritzels (20, 22) der Eingangswelle (14, 16) gegenüber dem Gehäuseelement (12) des Sammelgetriebes (10) drehbar gelagert ist.

6. Sammelgetriebe (10) nach Anspruch 5, **dadurch gekennzeichnet, dass** zumindest das eine der beidseitig des Ritzels (20, 22) angeordneten Lager (32, 34) innerhalb eines durch das Hohlrad (26) aufgespannten Volumens angeordnet ist.

7. Sammelgetriebe (10) nach einem der Ansprüche 1 bis 4, **dadurch gekennzeichnet, dass** jede der Eingangswellen (14, 16) über eine auf einer axialen Seite des jeweiligen Ritzels angeordnete Gleitlagerpaarung (32, 34) gegenüber dem Gehäuseelement (12) des Sammelgetriebes (10) drehbar gelagert ist.

8. Sammelgetriebe (10) nach Anspruch 7, **dadurch gekennzeichnet, dass** der über die Gleitlagerpaarung (32, 34) in Richtung der Innenverzahnung (24) zeigende und das jeweilige Ritzel (20, 22) tragende Endabschnitt der Eingangswelle (14, 16) freischwebend ausgeführt ist.

9. Sammelgetriebe (10) nach Anspruch 2 und einem der Ansprüche 3 bis 8, **dadurch gekennzeichnet, dass** das Hohlrad (26) mittelbar über die Ausgangswelle (18) gegenüber dem Gehäuseelement (12) drehbar gelagert ist.

10. Sammelgetriebe (10) nach Anspruch 2 und einem der Ansprüche 3 bis 8, **dadurch gekennzeichnet, dass** das Hohlrad (26) außenumfänglich gegenüber dem Gehäuseelement (12) drehbar gelagert ist.

11. Sammelgetriebe (10) nach Anspruch 10, **dadurch gekennzeichnet, dass** das Hohlrad (26) über zumindest ein Gleitlagerelement (36) gegenüber dem Gehäuseelement (12) gelagert ist.

12. Sammelgetriebe (10) nach einem der Ansprüche 1 bis 11, **dadurch gekennzeichnet, dass** das Gehäuseelement (12) mehrteilig aus im Wesentlichen zwei Gehäusehälften oder aus einem Gehäusevolumen mit Deckelelement zusammengesetzt ist.

13. Sammelgetriebe (10) nach einem der Ansprüche 1 bis 12, **dadurch gekennzeichnet, dass** ein in das Gehäuseelement (12) eingesetzter Lagereinsatz (38) vorgesehen ist, über den die beiden Eingangswellen (14, 16) und die Ausgangswelle (18) zumindest teilweise und mittelbar gegenüber dem Gehäuseelement (12) gelagert sind.

14. Antriebsstrang (100) für einen Schiffsantrieb zum Antreiben einer mit einem Propeller (104) verbundenen Propellerantriebswelle (102), umfassend zwei Antriebe (106) und ein die Antriebe (106) summierend mit der Propellerantriebswelle (102) verbindendes Getriebe (10), **dadurch gekennzeichnet, dass** das Getriebe (10) als Zweimotoren-Sammelgetriebe nach einem der vorangegangenen Ansprüche ausgebildet ist.
